**Europäisches Patentamt**

**European Patent Office**

**Office européen des brevets**

(19)

(11) **EP 0 889 011 A1**

(12) **EUROPEAN PATENT APPLICATION**

(43) Date of publication:
**07.01.1999 Bulletin 1999/01**

(51) Int. Cl.$^6$: **C04B 14/22**, C04B 18/04,
C03C 12/00

(21) Application number: **98111572.8**

(22) Date of filing: **25.02.1994**

| | |
|---|---|
| (84) Designated Contracting States:<br>**AT BE CH DE DK LI NL SE**<br><br>(30) Priority: **25.02.1993 SE 9300660**<br><br>(62) Document number(s) of the earlier application(s) in accordance with Art. 76 EPC:<br>**94908561.7 / 0 686 133**<br><br>(71) Applicant:<br>**SVENSK GLASATERVINNING AB**<br>**S-696 02 Hammar (SE)** | (72) Inventor: **Klingstedt, Gunnar**<br>**183 31 Täby (SE)**<br><br>(74) Representative:<br>**Stein, Jan Anders Lennart**<br>**Albihns Patentbyra Stockholm AB,**<br>**P.O. Box 3137**<br>**103 62 Stockholm (SE)**<br><br>Remarks:<br>This application was filed on 24 - 06 - 1998 as a divisional application to the application mentioned under INID code 62. |

(54) **Process for producing concrete**

(57)    The invention relates to a process for producing concrete comprising a mixture of cement, water and ballast, with a filler consisting of glass, preferably recycling glass, such as soda-lime-silicate glass, being employed, in which process the glass is washed, dried, crushed/ground and, where appropriate, sieved so that a glass filler is procured comprising glass particles having a particle size such that at least 95 % by weight of the glass filler has a particle size of less than 300 μm, after which the glass filler is mixed with the cement, the water and the ballast so that it constitutes at least 0.5 % by weight of the ballast and the cement, and, eventually, the finally mixed concrete compound is conveyed to the site for casting, cast and hardened. The invention also relates to a glass filler for use in the process.

EP 0 889 011 A1

Printed by Xerox (UK) Business Services
2.16.5/3.4

## Description

The present invention relates to a process for producing concrete and to a glass filler consisting of recycling glass for use therein.

Concrete consists essentially of cement, sand, stone and water. Sand and stone are materials which are included in a group having the common designation of ballast. Ballast comprises a number of different types of material and most of these are divided into subgroups with regard to particle distribution and particle size. In addition to these materials, chemical additives can also be added in order to influence properties of the concrete in the desired direction.

The invention relates to a novel, well-defined material and to its use in the manufacture of concrete as a replacement for a part of the ballast. This material comprises crushed and ground recycling glass having a well-defined composition and particle distribution. The material will be referred to below as glass filler. Within concrete technology, the expression filler denotes ballast consisting of crushed or uncrushed rock material with a particle fraction of from 0-0.25 mm. The designation aggregate 0-0.25 mm is also used for this fraction.

## State of the art

Filler materials in concrete can be subdivided into reactive and non-reactive (inert) materials. A reactive filler participates in chemical reactions with the cement paste, whereas a non-reactive filler is merely present as a dispersed, solid material in the cement matrix.

Hälleflinta (rock slab flint) ballast is an example of a reactive ballast. The hälleflinta, which contains alkali-reactive silicic acid, represents a problem, since it reacts with alkali from the cement. When manufacturing concrete using hälleflinta, which is a commonly occurring type of rock, and highly alkaline cement, or when some other type of alkali is supplied, a swelling silicic acid gel is formed in the concrete, which gel is such as to be able to bring about crack formation and diminished strength.

When producing concrete in the conventional manner, cement-like binding agents, so-called pozzolans, are used in the form of fine aggregates in addition to the cement. These substances include silicic acid/silica-containing materials.

It is known that when the particle size of the pozzolan employed decreases, the total quantity of water which must be added to the concrete increases. This has also been found to present a problem.

It is also known to use glass in different types of concrete mixtures.

GB-A-1 418 056 describes the use of recycling glass as a component in the production of building stone made of concrete. The glass which is used has an indicated size of between 1/2" and 30 mesh (U.S. sieve), i.e. in the order of size of between 600 $\mu$m and 12.7 mm. In addition, the glass should constitute up to 60% by weight of the concrete mixture with the exception of the water. However, the concrete which has been produced by these means does not exhibit a compression strength which is anywhere near that of the concrete which is prbduced in accordance with the invention, but, instead, is much lower.

SU-A-1 395 604 describes a concrete mixture for use within the building industry. The intention is to increase the frost resistance of concrete. The concrete mixture described comprises, in % by weight, cement, 32-42; ballast, 30-45; crushed crystalline waste from glass-fibre production in fractions of less than 0.14 mm, 14-36; and 1 N NaOH for the rest. From the examples in the document, it is evident that the admixture of the NaOH solution amounts to about 8%. The NaOH is added in order to activate the crystalline waste. The ballast used in the experiments consisted of quartz sand, $M_{kp} = 2.05$, having a size of up to 5 mm. While the compression strengths achieved do indeed lie within the same range as those achieved with concrete according to the invention, the glass is firstly crystalline, and the composition used is very special since no normal ballast for concrete is used and the amount of cement added is 2-3 times greater than that which is used in concrete.

US-A-3 823 021 describes the production of a fine aggregate of "waste glass" in which the glass is added to a cement mortar. The examples given do not include that type of material which is designated as stone > 8 mm.

DE-A-1 939 714 indicates, in general terms, that it should be possible to use crushed glass for concrete and concrete mortar.

US-A-4 997 485 discusses the disadvantages of using the abovementioned patented processes, namely that the ability of the cement to adhere to the smooth surfaces of the glass would constitute a significant disadvantage and that risks are involved in handling the sharp glass. This is the reason for the initial treatment of the glass, consisting of tumbling with water and quartz sand in accordance with the US patent. As regards the size, it is indicated merely that the aggregate should lie within sizes which are suitable for the application, i.e. between sieving curves A32 and B32 in the ease of concrete, for example. These ranges are not included in the invention according to the present patent application.

The Swedish patent SE-A-69367 also mentions the use of glass, as an improving additive to cement-like mortar material. However, this process requires the addition of sodium silicates (water glass) as reaction-promoting substances.

PCT/FI90/00250 describes substances of the so-called active filler type. Substances of this type are distinguished by the fact that they contain glass-like silica, which reacts with the calcium hydroxide which is formed on mixing water with cement, thereby forming compounds which impart strength to the concrete. These substances include, for example, fly ash from the combustion of coal and peat, and silica, which is obtained when producing silicon. In Finland, for instance, an additive material is used for producing concrete, which material comprises a so-called active filler consisting of a mixture of essentially dry inactive and/or weakly active components which are ground together with silica or some other material containing a quantity of amorphous silica, and the use of so-called plasticizing additives.

There are a number of variables in the production of concrete which are of importance for durability, compression strength, workability, ballast reactions and frost resistance.

One of these variables is the ballast material, its properties and particle distribution. Many of the gravel pits which are used today are poor in the fine fraction, i.e. that which, for the sake of simplicity, is below termed filler, i.e. material having a particle size of less than 0.25 mm. Often, this fraction has either been washed or flushed away from those places where it was previously to be found, or else it has been necessary to excavate m places which exhibit a disadvantageous distribution of the different particle size fractions. In addition, natural gravel pits are not available in some areas, and rock quarries have to be used. Material from the latter is blasted free and then subsequently crushed. When doing this, it has been found to be difficult to produce satisfactory fine material. In addition, the variation in different samples of natural filler means that these samples must always be tested with regard to distribution and particle size.

If the proportion of filler in the ballast is too small, the consistency and workability properties of the concrete are impaired and, in addition, the concrete exhibits a tendency to separate after casting.

The most important individual variable determing the strength of the finished concrete is the ratio between water and cement, the so-called water-cement number (wcn). A large amount of water and a small amount of cement give a weak concrete, and vice versa.

A number of experiments have been carried out in which glass has been admixed with concrete, but the result has often amounted to impaired strength, expansion, lower compression strength, etc. The expansion is due principally to alkali/silicic acid reactions. It has been found possible to counteract these by, inter alia, admixing fly ash in the concrete. In a report where glass was used as a filler in cement mortar, some improved properties have been obtained, such as greater compression strength and improved resistance to wear, but, on the other hand, inferior resistance to frost and thawing salt and greater water absorption, see E. Krebs, R. Sagelsdorff, "Glasfiller erhöht Mörtelqualität" (Glass filler increases mortar quality), Swiss Materials. (1989), Vol. 1, No.5, pp. 24-260.

**Objects**

One object of the invention is to provide a process in which an improvement is achieved in the properties of the fresh concrete on casting, i.e. to obtain improved workability while maintaining the water-cement number (wcn) or else to maintain the workability at a lower wcn.

A further object is a process in which greater compression strength is obtained in the finished concrete.

Yet another object is to be able to utilize gravel pits which have the wrong distribution of particle size, and to be able to manufacture the same quality of concrete using a smaller total quantity of gravel and a larger total quantity of stone. This also includes being able to bring about a re-proportioning of the concrete so that less cement is required.

A further aim is to be able to utilize sea sand, which, owing to its low content of fine material <0.25 mm, has previously not been suitable for use.

An additional object is to provide the possibility of doing without the expensive flow auxiliaries, so-called plasticizing additives. These agents are preferably avoided principally because they are expensive and also because they are considered to be injurious to health.

An additional object is to counteract the alkali/silicic acid reaction in order to be able to use ballast which contains hälleflinta and chemically similar substances while at the same time maintaining or increasing the quality of the concrete.

An additional object is to improve the workability of ready mixed concrete using crushed ballast.

An additional object is to increase the stability of foam concrete.

An additional object is to increase the workability in very stiff concrete compositions (concrete of earth-moist consistency).

Finally, an object is to provide a glass filler for use in the process according to the invention, which filler is easy to handle and can be transported.

These objects are achieved by the characteristics which are evident in Patent Claims 1 and 9.

Preferred embodiments of the invention have been given the characteristics evident from the subclaims.

**Advantages**

Experiments have shown that the glass filler concrete gives rise to a looser consistency for the same water-cement number than does corresponding concrete without a glass filler. This provides a possibility of reducing the quantity of water when the glass filler according to the patent claims replaces a part of the natural gravel. As has been observed above, the consistency of the concrete has an important influence on the ability to cast the concrete. A stiff concrete is more difficult to cast, i.e. it is more difficult to fill the mould with it, than is a loose concrete. A lower water-cement number gives rise to greater strength. Water-reducing additives are often used for reducing the water-cement number. This is not necessary when the glass filler according to the claims is employed.

By reducing the quantity of water and maintaining the consistency of the fresh concrete in which the filler is used, a substantial improvement was achieved in the strength of the concrete, which strength additionally increases with time.

It has been found that the stability of concrete having a relatively loose consistency can be increased by adding the glass filler in accordance with the invention.

The water-cement number for ordinary concrete varies from 0.4 to 0.7, i.e. with the amount of water being 40 - 70% of that of the cement. When concrete is being used for sophisticated purposes, such as, for example, for bridges, the value of the water-cement number is about 0.40, while that of ordinary house-construction concrete can be 0.65. In the main, this water is chemically bound. We have shown that, when the glass filler is admixed, improved properties can be achieved, both in the fresh condition and in the long-term hardened condition, even with a diminished water content.

By adding glass filler, increased strength has been achieved with a formula which is otherwise identical.

**Laboratory experiments**

In the experiments, crushed recycling glass (0 - 50 mm) was used which had been washed thoroughly in several stages in order to remove food-product residues and paper labels. After washing, the glass was dried thoroughly and crushed in a jaw crusher to a particle size of 0 - 10 mm, after which it was finely ground in a Jordan mill to a fine powder. The glass powder was divided by sieving into three fractions <0.074 mm, 0.074 - 0.125 mm, and 0.125 - 0.250 mm. These three fractions are employed for producing the glass-filler concrete. It is important that the glass is dry when it is mixed in the concrete. Otherwise, an unknown quantity of water is supplied to the concrete, which quantity affects the wcn number.

In order to obtain a measure of the fineness of the glass fractions employed, the specific surface area was determined in accordance with the method of Blaine.

Table 1

| Specific surface area. | | | |
|---|---|---|---|
| Glass fraction | <0.074 | 0.074-0.125 | 0.125-0.250 |
| Spec. surface area m$^2$/kg | 327 | 118 | |

In the determination, no measurement value was obtained for the coarsest fraction. The finest fraction has a measurement value which is normal for cement.

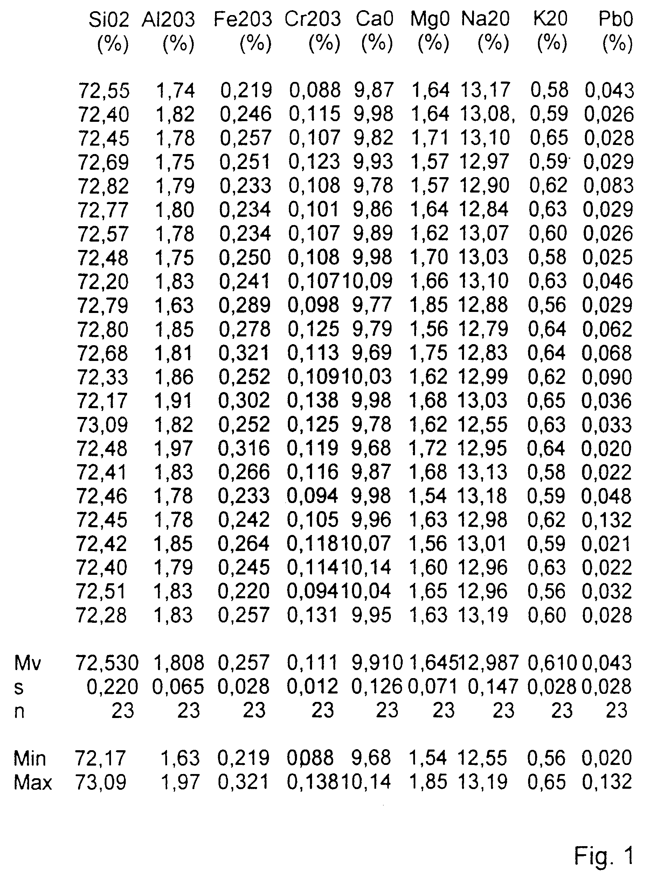

A composition which is typical for the recycling glass is shown in Fig. 1.

Comparative experiments were carried out as follows:

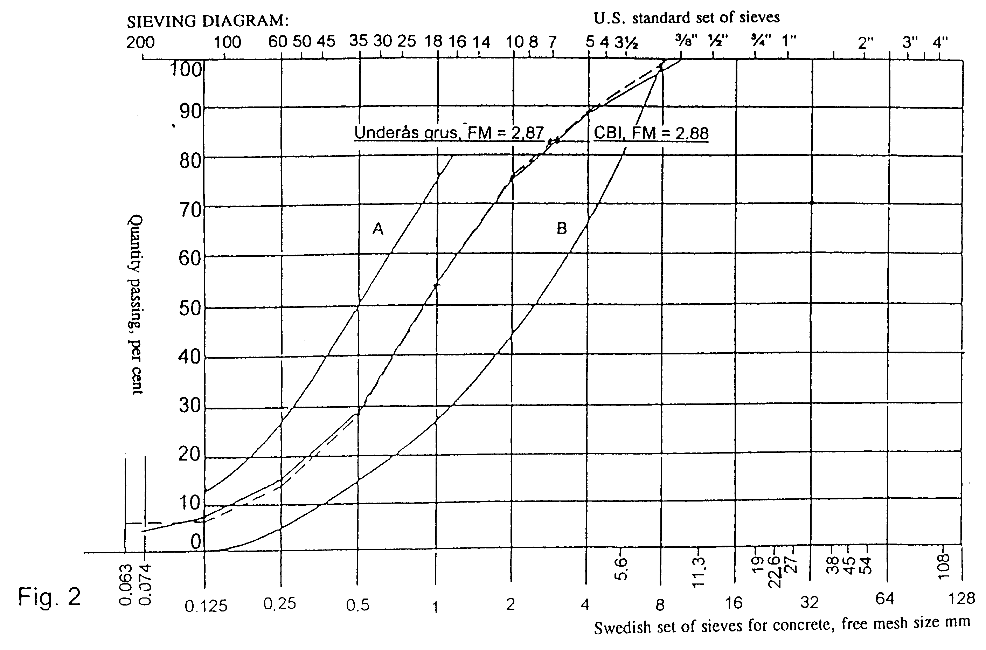

In the experimental measurements which are referred to below, natural gravel from the Underås gravel pit was used as the reference gravel when manufacturing the concrete in question. The fraction <0.25 mm was removed from this gravel by sieving and replaced with glass filler. The sieving curve for natural Underås gravel is shown in Fig. 2.

Four different concrete mixtures were produced; two using Underås reference gravel, one of which contained glass filler <0.25 mm. The second mixture was used as the reference. Cubes of 150×150×150 mm were manufactured from these mixtures in order to determine compression strength and frost resistance, as were prisms measuring 300×75×75 mm for the alkali/silicic acid test. The batch size was 90 l.

The compositions of the mixtures are given in Table 2.

Table 2

| Mixing formulations for concrete containing glass filler and for reference concrete. UÅ refers to Underås gravel. | | | |
|---|---|---|---|
| Constituent material | Fraction mm | Glass+UÅ kg/m$^3$ | UÅ ref kg/m$^3$ |
| Glass <0.074 | 33 | | |
| Glass 0.074-0.125 | 33 | | |
| Glass 0.125-0.25 | 66 | | |
| UÅ gravel | 0.25-8 | 767 | |
| UÅ gravel | 0-8 | | 896 |
| Total 0-8 | 899 | 896 | |
| Stone, UÅ | 8-16 | 925 | 921 |
| Cement Slite | | | |
| Std-P | 317 | 315.6 | |
| Water | 195 | 198 | |
| Water-cement number (wcn) | | 0.62 | 0.63 |
| Slump measurement | | 140 | 100 |

The concrete formulation for the reference mixture, UÅ ref, was composed for a consistency having a slump measurement of 100 mm. The mixture containing glass, glass+UÅ exhibited a much looser consistency, with a slump measurement of 140 mm, despite the fact that the water-cement number was adjusted downwards slightly (0.62 instead of 0.63). The glass-filler concrete is thus less water-demanding than is the reference, in order to achieve the same consistency. The lower wcn (water-cement number) gives rise to greater compression strength under conditions which are otherwise unaltered. By lowering the wcn for concrete manufactured with concrete filler while maintaining the consistency, a higher concrete strength can be achieved. Alternatively, the same strength can be achieved with a lower content of cement, something which can be of importance for concrete manufacture, since the cement is the most expensive constituent material.

The two remaining concrete mixtures were manufactured using hälleflinta, which is a reactive ballast. Glass filler <0.25 mm, which replaced the corresponding fraction of the ballast mixture, was admixed with one of the mixtures. The other mixture, without glass, was used as the reference. Cubes and prisms were manufactured from these mixtures as described above. The batch size was 30 l.

The mixtures containing hälleflinta (HF) had the compositions given in Table 3.

Table 3

| Mixing formulations for concrete containing glass and hälleflinta (HF) gravel. | | | |
|---|---|---|---|
| Constituent material | Fraction mm | Glass+HF kg/m$^3$ | HF ref kg/m$^3$ |
| Glass <0.074 | 33 | | |
| Glass 0.074-0.125 | 33 | | |
| Glass 0.125-0.250 | 66 | | |
| HF gravel | 0.25-8 | 770 | |
| HF gravel | 0-8 | | 894 |
| Total 0-8 | 902 | 894 | |
| Stone, UÅ | 8-16 | 871 | 864 |
| Cement Slite | | | |
| Std.P | 336.7 | 335 | |
| Water | 208 | 213.7 | |
| Wcn | 0.62 | 0.64 | |
| Slump measurement, mm | | 105 | 105 |

In the case of these mixtures, too, it is evident that the glass-filler concrete requires less water for the same slump measurement. The wcn is 0.62 for glass+HF and 0.64 for HF ref.

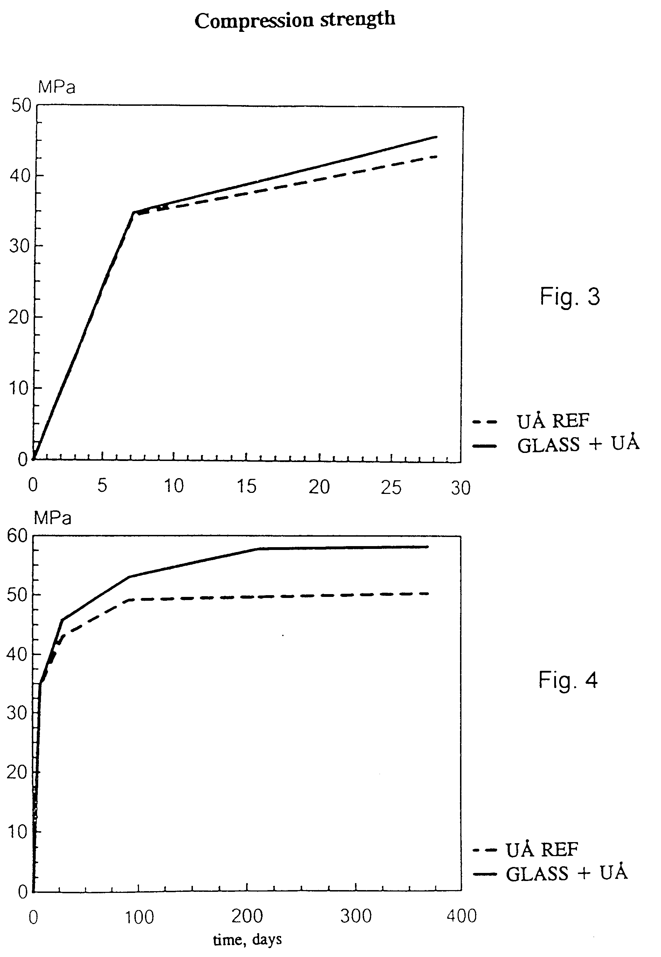

The compression strength was determined for test specimens from the different experimental series. The results are given in Table 4. The strength was measured at 7, 28, 91, 212 and 367 days of age. The value at 7 days constitutes the measurement of early strength, the 28-day value constitutes the strength value in accordance with the norm, and the values at 91, 212 and 367 days provide a measure of the long-term strength. The curves of the compression strengths for glass+UÅ and for UÅ ref are shown in Figs. 3 and 4.

Table 4

| Compression strength of the concrete test specimens. Compression strength, MPa | | | | | |
|---|---|---|---|---|---|
| Time, days | 7 | 28 | 91 | 212 | 367 |
| Glass+UÅ | 34.8 | 45.8 | 53.0 | 57.8 | 58.2 |
| UÅ ref | 34.4 | 43.0 | 49.2 | 49.7 | 50.3 |

**Frost resistance**

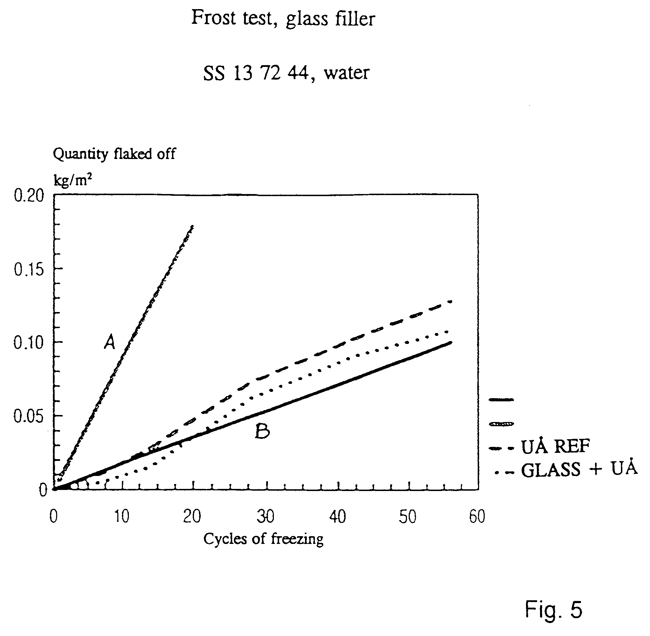

The frost resistance was determined in accordance with Swedish standard SS 13 72 44 procedure I, method B, using water for the concretes glass+UÅ and UÅ ref. The test specimens were thermally insulated with polystyrene cellular plastic on all sides except the freezing surface. Water was poured onto the freezing surface to form a layer of about 3 mm. Subsequently, the test specimens were subjected to 56 freeze/thaw cycles. During one freeze/thaw cycle, i.e. over a period of 24 hours, the temperature goes from +20°C to -20°C and up, once more, to +20°C. The quantity of material which has flaked off from the concrete surface is weighed after 7, 14, 28, 42 and 56 cycles. The quantity which has flaked off constitutes a measure of the frost resistance of the concrete. The smaller the quantity flaked off, the greater the degree of frost resistance exhibited by the concrete. The results of the test are shown in Fig. 5, in which two continuous lines, A and B, have been drawn to show good and very good, respectively, frost resistance. It is evident from the figure that the curves for the concretes under test lie very close to each other and only slightly above the line for very good frost resistance. It is evident from the result, therefore, that the concretes exhibit approximately the same degree of frost resistance, i.e. good resistance. Nevertheless, the resistance is somewhat inferior for the concrete containing glass.

**Alkali/silicic acid test**

Since it can be expected that the glass will react with alkali (Na, K) and water in the concrete, and there form a swelling alkali/silicic acid gel, an accelerated test for an alkali/silicic acid reaction was carried out. The gel can exert such a great internal expansive pressure in the concrete that the concrete cracks and, in the worst case, completely loses its strength.

The test involves test specimens, in this case prisms measuring 300×75×75 mm and aged about 28 days, being immersed in a saturated NaCl solution, which is maintained at a temperature of 50°C. Subsequently, the change in the length of the test specimens is measured at the end of every other week during a period of 140 days. If dangerous expansion does take place, it has usually occurred by 100 days.

The alkali/silicic acid test was carried out both for glass+UÅ and UÅ ref mixtures, and for glass+HF and HF ref mixtures. Hälleflinta is a reactive ballast which gives rise to harmful expansion in concrete, as has been documented in alkali/silicic acid reaction tests which have been carried out. It has now emerged that the glass filler suppresses this expansion.

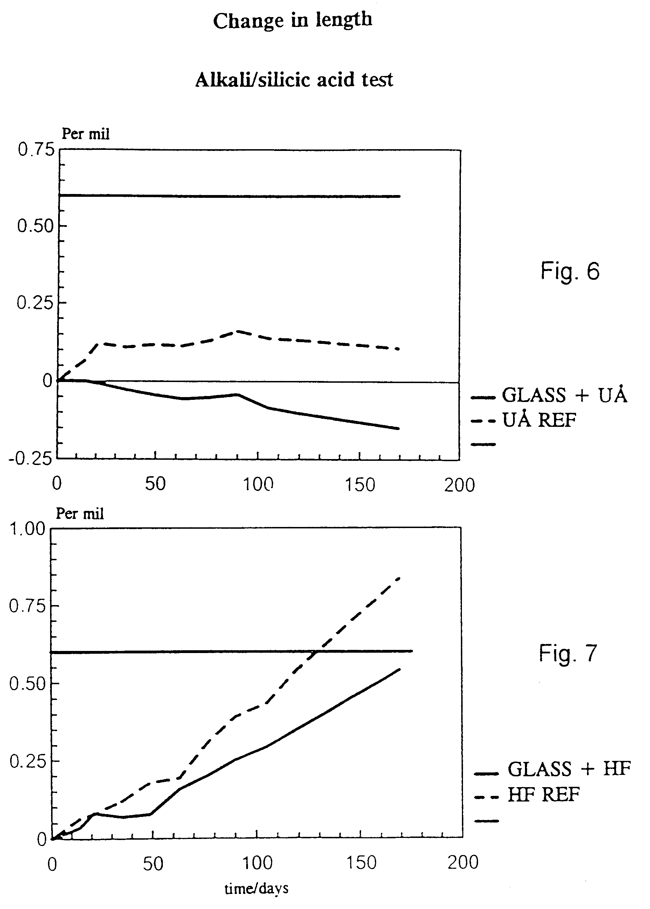

The results of these measurements made during a test period of up to about 170 days are shown in Figs. 6 and 7. In the figures, the limit value of 0.6 per mil is drawn in. When this value is exceeded, cracks form visibly in the concrete. The figures show that the glass has a marked effect on the result. Instead of expanding, the glass-filler concrete shrinks to a moderate extent. The reference concrete exhibits a mild expansion, entirely in agreement with that which has previously been demonstrated.

As expected, the concrete containing hälleflinta as ballast exhibits a much greater expansion than does the concrete containing Underås gravel. The expansion of the test specimens exhibits an unbroken trend upwards and reaches the 0.6 per mil limit on about day 130 of the test. The expansion of the test specimens containing glass filler is approximately 35% less than that of the reference containing hälleflinta. In this respect, therefore, the glass filler has a favourable effect.

**Full-scale experiments**

Full-scale manufacture of concrete containing glass filler has been carried out at a concrete factory. The experiments were carried out using a 3 m³ concrete mixer of the free-fall type. All constituent materials, such as cement, fine gravel, stone, water and flow additive, were metered in using normal weighing and metering devices. The glass filler was added by hand in weighed quantities.

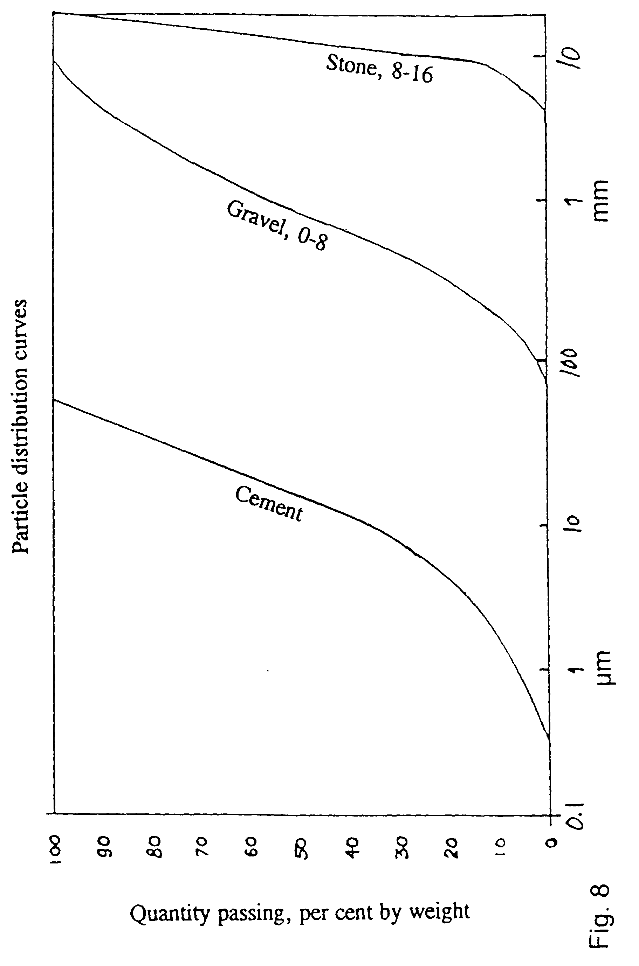

In order to elucidate the effect of the particle size distribution which can be achieved using the glass filler in accordance with the patent claims, the particle size distributions for cement, gravel 0-8 and stone 8-16 are shown in Fig. 8. In this figure, it can be seen that the proportion of gravel 0-8 passing at less than 100 μm is very small and that, in the finished concrete mixture, a gap will exist in the particle size distribution in the region between the cement and the gravel and stone. It is this part of the particle size distribution which the glass filler according to the invention is intended to fill.

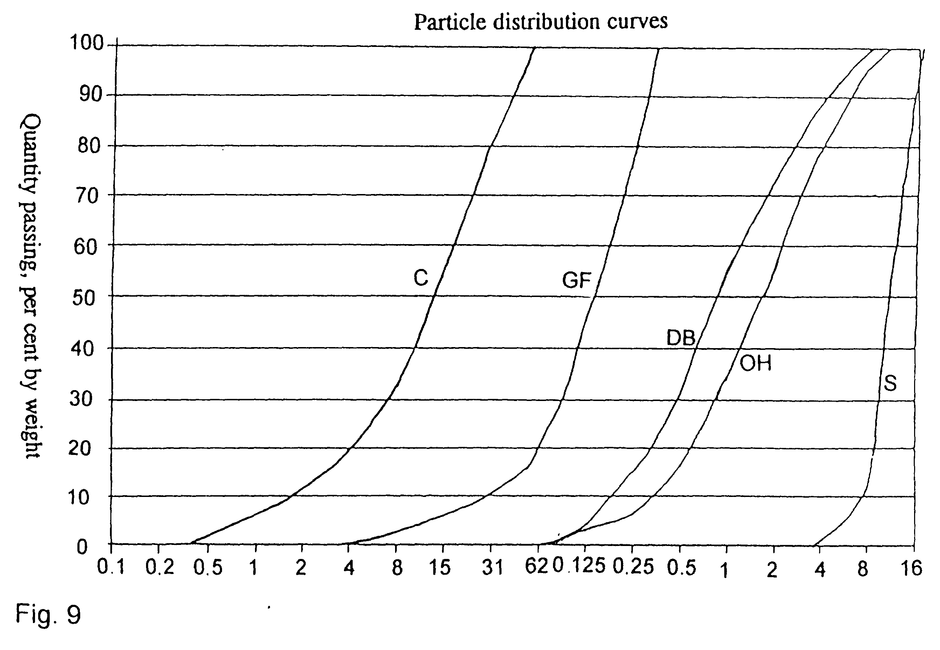

Fig. 9 shows further particle size distribution curves for the following materials:

| | |
|---|---|
| Cement | Curve C |
| Glass filler | Curve GF |
| Fine gravel, Dansby gravel pit | Curve DB |
| Fine gravel, Olivehult gravel pit | Curve OH |
| Stone, shingle | Curve S |

From this figure, it can be seen that the glass filler, which was used in the process, fills in a particle size range which would otherwise be empty.

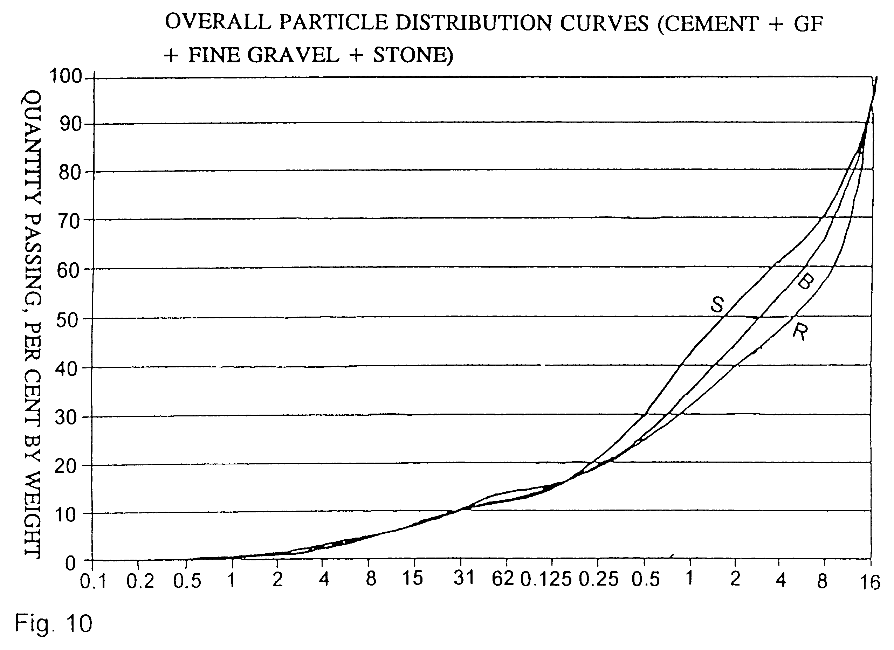

Fig. 10 shows an overall particle distribution curve for a mixture of cement, glass filler, fine gravel and stone in accordance with the characterizing clause of the claims. The curve designated S indicates the distribution in a mixture including 700 kg of stone and 0% glass filler. The curve designated B indicates the distribution in a mixture including 800 kg of stone and 5% glass filler, and, finally, the curve R indicates the distribution in a mixture including 1000 kg of stone and 7% glass filler.

In the full-scale experiments which were undertaken, the concrete composition which is given in Table 5 below was used as the starting point. This reference mixture contains 15% of particles <0.25 mm. Subsequently, glass filler was added to the mixture in different % amounts: 3, 5 and 7.

A typical example of the concrete mixture constituting the reference mixture in the experiments includes:

Table 5

| Reference mixture | | |
|---|---|---|
| Component | Size (mm) | Quantity (kg/m$^3$) |
| Cement (C) | | 265 |
| Fine gravel (FG) | 0-8 | 1200 |
| Stone (S) | 8-16 | 700 |
| Water (V) | | 172 WCN=0.65 |
| Flow V33 | | 4.77 |

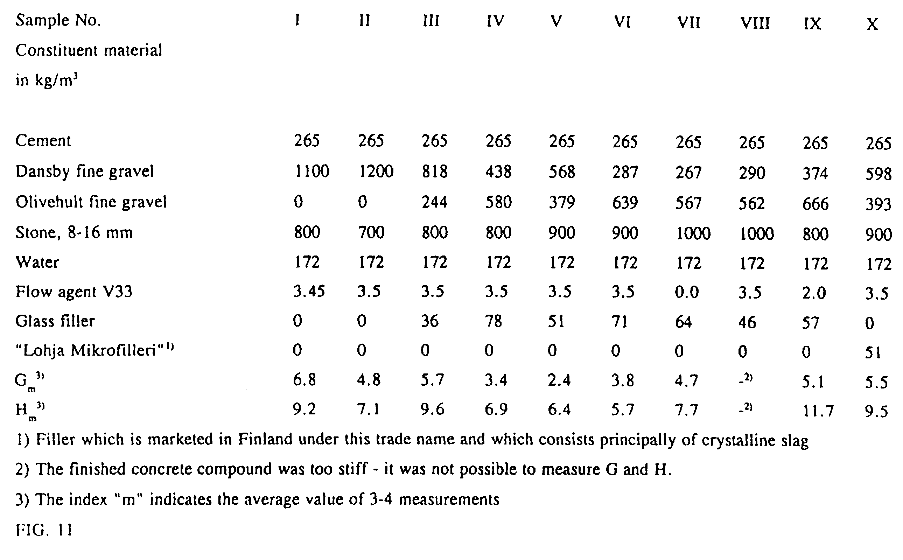

This concrete is an example of a so-called K30 semi-flow. (Semi-flow corresponds to a slumptest 100-150 mm). The compositions of the concrete mixtures are shown in Fig. 11.

Rheological measurements were carried out on these concrete mixtures using CBI's BML viscometer, which is an improved version of G.H. Tattersall's "Two-point test workability apparatus" (Tattersall, G.H., "Workability and Quality Control of Concrete", E & FN Spon, 1991, p. 262).

The measurements are based on the assumption that fresh concrete behaves like a Bingham liquid, which can be described by the following equation:

$$T = g + hN$$

where

T = torque, Nm
g = shearing stress, Nm
h = plastic viscosity, Nms
N = velocity, revolutions/s

For measurements using the BML viscometer, the concrete is placed in a cylindrical vessel which rotates at varying velocities. At the same time, a stationary stirrer is immersed in the concrete. During the measurements, the torque is measured at different velocities. Using the measured points, a regression line is calculated from which, in turn, g and h can be calculated.

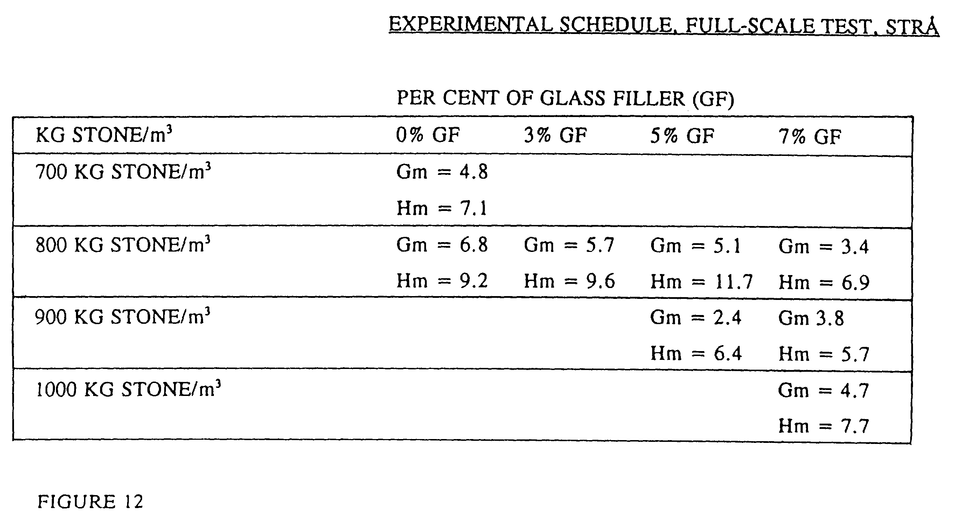

The constants g and h (designated in the experiments below as $G_m$ and $H_m$, i.e. the average values of several experiments) can assume values which are more or less appropriate. A clear and marked tendency can be seen in Fig. 12, namely that increased addition of the glass filler permits increased addition of stone while maintaining the properties in the fresh state and without adding plasticizing agents.

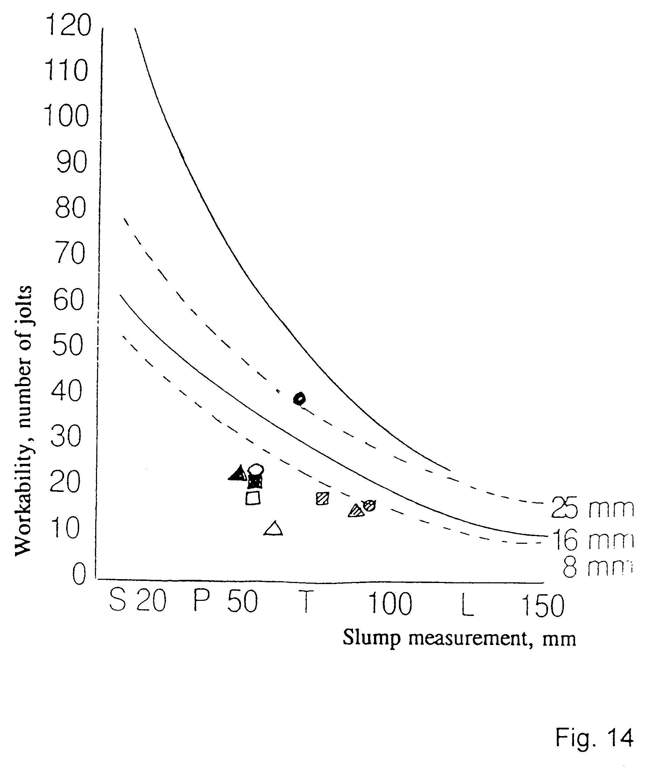

The workability of concrete having the type designations K30T18, K30T25 and K25T25 is plotted in Fig. 14. In all cases, the reference concrete contains 10 kg of silica; this quantity of silica has been removed from each reference concrete, together with a part of the fine gravel (0-8 mm), and replaced by adding 50 and 75 kg, respectively, of glass filler. In Fig. 14, the reference mixtures are denoted by circles, the mixtures containing 50 kg of glass filler by triangles, and the mixtures to which 75 kg of glass filler have been added by squares. The symbols for K30T18 are open, those for K30T25 filled, and those for K25T25 cross-hatched. On the figure, upper and lower curves for shingle and macadam, respectively, have also been drawn in.

This improvement in workability implies that glass-filler concrete can be manufactured having a substantially lower slump measurement while retaining good workability.

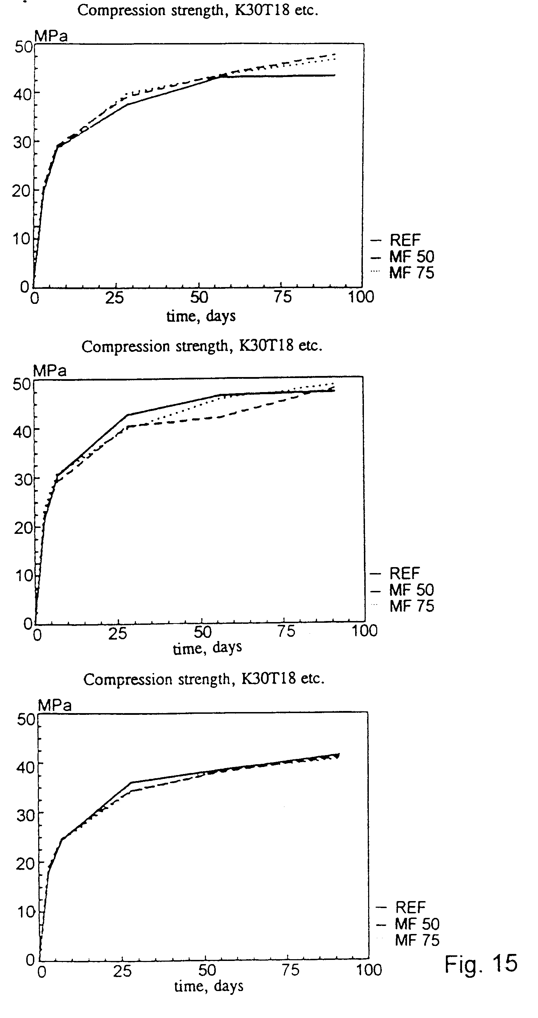

Fig. 15 shows the strengths as a function of time for the concrete qualities K30T18, K30T25 and K25T25 containing 50 kg and 75 kg of glass-filler additive per cubic metre. The graphs show that the strengths achieved are as great as for the reference concrete containing 10 kg of silica powder per cubic metre. The additions were made in the same way as for the mixtures in Fig. 14.

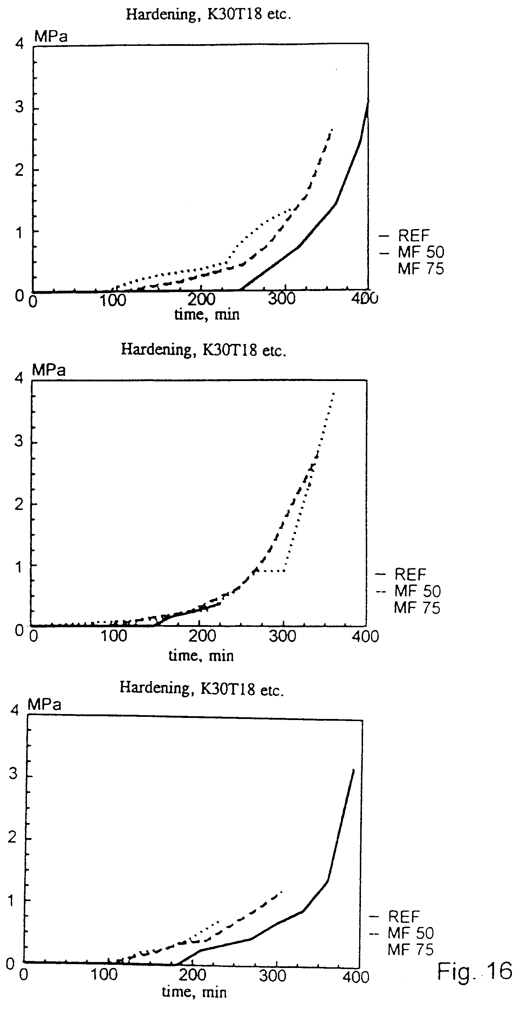

Fig. 16 shows how adding glass filler to concrete causes the concrete to harden more rapidly. This is a desirable property for concrete which is to be cast to form a floor, since machine-smoothing can be initiated at an earlier stage.

The graphs in Figure 16 show the course of hardening for the concrete qualities K30T18, K30T25 and K25T25. It is evident from Figure 16 that concrete containing glass filler hardens more rapidly than does reference concrete without glass filler. REF indicates a concrete containing 10 kg/m$^3$ silica, MF50 denotes a concrete containing 50 kg/m$^3$ glass filler, and MF75 denotes a concrete containing 75 kg/m$^3$ glass filler. The additions were made in the same way as for the mixtures in Fig. 14.

**Areas of application**

The above-described concrete is ordinary house-construction concrete. It has also been found that the concrete which is used in so-called self-drying floors, which normally have a very poor workability, is substantially improved by adding glass filler. This is, of course, especially desirable in view of all the problems which have arisen with residual moisture and damp trapped in the floor.

The glass filler can also be employed for vibration-free concrete, i.e. for concrete whose consistency is so loose that it does not need to be vibrated when casting. In this case, it is found that a consistency in the region of full-flow can be obtained with the concrete nevertheless being sufficiently stable towards separation.

The workability of ready mixed concrete containing crushed ballast has been found to be poorer than that containing natural ballast. Results have now shown that concrete containing crushed stone (0-18, 0-25 mm) and natural fine gravel (0-8 mm), and added glass filler, provides an improved concrete. This is important, since fully crushed material will become more common m the future, and glass-filler additives according to the invention will fulfil an important function in this context.

It has also been found that glass filler can be employed for manufacturing concrete of earth-moist consistency, i.e. that type of concrete which is used, inter alia, for producing cement pipes, wells, etc. Owing to the high degree of workability of the concrete which is obtained when glass filler is added, the rotation times for forming are decreased. It has been found that the good compactability of concrete containing added glass filler results in curved parts having a better quality, without any other additive being required.

A suitable composition for producing concrete pipes and the like can be the following: glass-filler additions in the order of sire of about 25, or 37, kg per batch of 1200 kg of concrete compound having an earth-moist consistency and a wcn of about 0.34-0.38. There is no reason to assume that these abovementioned values should in any way constitute a delimitation for the use of glass filler in earth-moist concrete, and the values are given solely by way of illustration. Experiments showed that, as compared with concrete conventionally used for the purpose, a concrete was obtained which was better compacted and which was easier to vibrate in a so-called Simplex machine (employed for manufacturing concrete pipes and the like).

The addition of glass filler also represents a substantial improvement when producing HD and HDF slabs, which are produced by extruding very stiff compounds. It has been found that a higher degree of compaction is achieved, a lower wcn number is required, greater strength is achieved and less compacting work is needed (decreased energy consumption), and all this results, in the final analysis, in diminished wear on machinery.

Naturally, the same arguments will also apply to products such as concrete slabs and block paving.

Over and above this, it has been found that hardened concrete containing glass filler has a more attractive appearance. Those time deposits which, in the form of a white fog or a white, powder-like surface, discolour concrete surfaces to varying extents do not occur on the surface of concrete containing glass filler according to the invention.

It has also been found that the stability of foam concrete is improved by the addition of glass filler, something which further extends the range of application of this additive.

Due to the fact that workability is improved by adding glass filler, this latter material is eminently suited for use in high performance concrete of the type which is suitable for self-drying floors. Naturally, this is due to the fact that the content of water in the concrete is reduced to a minimum corresponding to that quantity which is needed for hydrating the cement. It is only with difficulty that other forms of self-drying concrete can be worked and used for casting floors. The advantage of using the glass filler according to the invention in the concrete is that, with self-drying floors, overlying floors can be laid directly.

A further area of application is represented by concrete containing added glass filler and used for injection mortar and for shotcreting. As in the other cases, a contributory reason for this is the improvement in the workability properties obtained with the additive.

**Conclusions**

It has thus been found that the glass should be washed before it is added to the concrete, since the unwashed glass resulted in the concrete having approximately 36% lower strength after 28 days, and approximately 30% lower strength after 92 days, as compared with when washed glass was used.

It has also been found that the long-term strength increases more rapidly for glass-filler concrete than it does for reference concrete without glass. In experiments which were carried out, the glass-ruler concrete gave 6.5% higher compression strength at 28 days, 7.7% higher strength at 91 days, and 16.3% higher strength at 212 days (7 months), than did the reference concrete. We have interpreted this as the result of a chemical reaction in the glass which is continuing at an advanced age. The glass is presumed to have a pozzolan effect, which should involve the glass reacting with calcium hydroxide and water and forming a calcium silicate hydrate gel, which contributes to the strength of the concrete.

In the alkali/silicic acid test, the concrete containing glass and Underås gravel continues to shrink while the concrete without glass swells somewhat and appears to have reached a relatively stable level. In comparison with this, a lower degree of expansion is obtained in those tests which were carried out using reactive hälleflinta as ballast and with the filler moiety replaced by glass than was the case for reference concrete containing hälleflinta without glass. This demonstrates that the glass filler suppresses harmful ballast reactions, probably as a result of the glass filler reacting with alkali in the concrete with the formation of alkali metal silicates, which, in turn, react with free lime, $Ca(OH)_2$, and form calcium silicate hydrates.

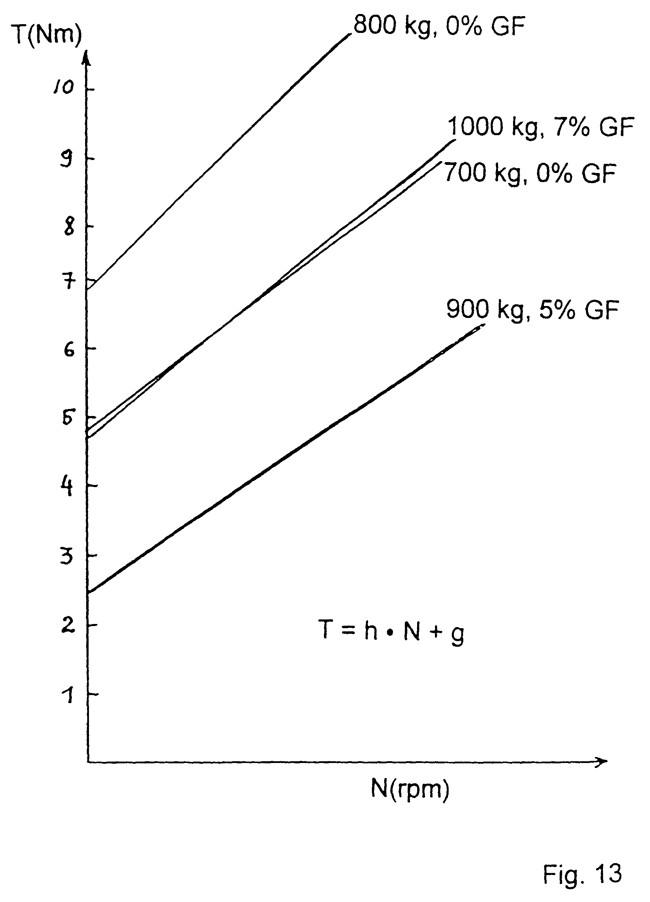

Finally, Fig. 13 shows the regression lines for different concrete mixtures, from which it is evident that, as a result of admixing glass filler according to the invention, the product which expresses the plastic viscosity h decreases or is maintained, while, at the same time, the shearing stress g can be decreased.

## Claims

1. Process for producing concrete comprising a mixture of cement, water and ballast, in which process a filler is used consisting of glass, preferably recycling glass, such as soda-lime-silicate glass, characterized in that the glass is washed, dried, crushed/ground and, where appropriate, sieved so that a glass filler is procured comprising glass particles having a particle size such that at least 95% by weight of the glass filler has a particle size of less than 300 μm, in that the glass filler is mixed with the cement, the water and the ballast so that it constitutes at least 0.5% by weight of the ballast and the cement, and in that the finally mixed concrete compound is conveyed to the site for casting, cast and hardened.

2. Process according to Claim 1, characterized in that at least 98% by weight of the glass filler is crushed/ground and, where appropriate, sieved to a particle size of less than 300 μm.

3. Process according to either of the preceding claims, characterized in that the glass filler can wholly or in part replace the corresponding, necessary fine-gravel part, having a particle fraction of 0 - 8 mm, of the ballast.

4. Process according to any one of the preceding claims, characterized in that the glass filler can, to a certain extent, replace the cement.

5. Process according to any one of the preceding claims, characterized in that the glass filler can wholly or in part replace plasticizing additives.

6. Process according to any one of the preceding claims, characterized in that the glass filler is composed of a soda-lime-silicate glass in which the sum, in % by weight, of $SiO_2$, CaO and $Na_2O$ amounts to at least 90%.

7. Process according to any one of the preceding claims, characterized in that the glass filler is composed of a soda-lime-silicate glass having an average composition essentially comprising $SiO_2$, 70 - 74% by weight, CaO, 8.5 - 10.5% by weight and $Na_2O$, 11.5 - 14% by weight, with the remainder comprising oxides occurring in ordinary recycling glass, such as $Al_2O_3$, $Fe_2O_3$, $Cr_2O_3$, MgO, $K_2O$ and PbO.

8. Glass filler for use in the process according to any one of the preceding claims, which filler comprises a glass essentially consisting of recycling glass, such as soda-lime-silicate glass, characterized in that the glass filler contains crushed/ground and, where appropriate, sieved particles which are, in the main, clean and dried and which have a size such that at least 95 % by weight are less than 300 μm.

9. Glass filler according to Claim 8, characterized in that at least 98% by weight of the glass filler has a particle size of less than 300 μm.

10. Glass filler according to any one of Claims 8 to 9, characterized in that the glass filler is composed of a soda-lime-silicate glass having an average composition essentially comprising $SiO_2$, 70 - 74% by weight, CaO, 8.5 - 10.5% by weight and $Na_2O$, 11.5 - 14% by weight, with the remainder comprising oxides occurring in ordinary recycling

glass, such as $Al_2O_3$, $Fe_2O_3$, $Cr_2O_3$, MgO, $K_2O$ and PbO.

11. Use of concrete produced in accordance with the process according to any one of Claims 1 to 7 for producing concrete articles such as pipes, wells, HD slabs and HDF slabs, where the concrete of the earth-moist concrete type contains a mixture of cement, water and ballast, and where glass filler according to Claims 8 - 10 is employed.

| | SiO2 (%) | Al203 (%) | Fe203 (%) | Cr203 (%) | CaO (%) | MgO (%) | Na20 (%) | K20 (%) | PbO (%) |
|---|---|---|---|---|---|---|---|---|---|
| | 72,55 | 1,74 | 0,219 | 0,088 | 9,87 | 1,64 | 13,17 | 0,58 | 0,043 |
| | 72,40 | 1,82 | 0,246 | 0,115 | 9,98 | 1,64 | 13,08, | 0,59 | 0,026 |
| | 72,45 | 1,78 | 0,257 | 0,107 | 9,82 | 1,71 | 13,10 | 0,65 | 0,028 |
| | 72,69 | 1,75 | 0,251 | 0,123 | 9,93 | 1,57 | 12,97 | 0,59 | 0,029 |
| | 72,82 | 1,79 | 0,233 | 0,108 | 9,78 | 1,57 | 12,90 | 0,62 | 0,083 |
| | 72,77 | 1,80 | 0,234 | 0,101 | 9,86 | 1,64 | 12,84 | 0,63 | 0,029 |
| | 72,57 | 1,78 | 0,234 | 0,107 | 9,89 | 1,62 | 13,07 | 0,60 | 0,026 |
| | 72,48 | 1,75 | 0,250 | 0,108 | 9,98 | 1,70 | 13,03 | 0,58 | 0,025 |
| | 72,20 | 1,83 | 0,241 | 0,107 | 10,09 | 1,66 | 13,10 | 0,63 | 0,046 |
| | 72,79 | 1,63 | 0,289 | 0,098 | 9,77 | 1,85 | 12,88 | 0,56 | 0,029 |
| | 72,80 | 1,85 | 0,278 | 0,125 | 9,79 | 1,56 | 12,79 | 0,64 | 0,062 |
| | 72,68 | 1,81 | 0,321 | 0,113 | 9,69 | 1,75 | 12,83 | 0,64 | 0,068 |
| | 72,33 | 1,86 | 0,252 | 0,109 | 10,03 | 1,62 | 12,99 | 0,62 | 0,090 |
| | 72,17 | 1,91 | 0,302 | 0,138 | 9,98 | 1,68 | 13,03 | 0,65 | 0,036 |
| | 73,09 | 1,82 | 0,252 | 0,125 | 9,78 | 1,62 | 12,55 | 0,63 | 0,033 |
| | 72,48 | 1,97 | 0,316 | 0,119 | 9,68 | 1,72 | 12,95 | 0,64 | 0,020 |
| | 72,41 | 1,83 | 0,266 | 0,116 | 9,87 | 1,68 | 13,13 | 0,58 | 0,022 |
| | 72,46 | 1,78 | 0,233 | 0,094 | 9,98 | 1,54 | 13,18 | 0,59 | 0,048 |
| | 72,45 | 1,78 | 0,242 | 0,105 | 9,96 | 1,63 | 12,98 | 0,62 | 0,132 |
| | 72,42 | 1,85 | 0,264 | 0,118 | 10,07 | 1,56 | 13,01 | 0,59 | 0,021 |
| | 72,40 | 1,79 | 0,245 | 0,114 | 10,14 | 1,60 | 12,96 | 0,63 | 0,022 |
| | 72,51 | 1,83 | 0,220 | 0,094 | 10,04 | 1,65 | 12,96 | 0,56 | 0,032 |
| | 72,28 | 1,83 | 0,257 | 0,131 | 9,95 | 1,63 | 13,19 | 0,60 | 0,028 |
| Mv | 72,530 | 1,808 | 0,257 | 0,111 | 9,910 | 1,645 | 12,987 | 0,610 | 0,043 |
| s | 0,220 | 0,065 | 0,028 | 0,012 | 0,126 | 0,071 | 0,147 | 0,028 | 0,028 |
| n | 23 | 23 | 23 | 23 | 23 | 23 | 23 | 23 | 23 |
| Min | 72,17 | 1,63 | 0,219 | 0,088 | 9,68 | 1,54 | 12,55 | 0,56 | 0,020 |
| Max | 73,09 | 1,97 | 0,321 | 0,138 | 10,14 | 1,85 | 13,19 | 0,65 | 0,132 |

Fig. 1

Fig. 2

SIEVING DIAGRAM:

U.S. standard set of sieves

Swedish set of sieves for concrete, free mesh size mm

EP 0 889 011 A1

## Compression strength

Fig. 3

-- UÅ REF
— GLASS + UÅ

Fig. 4

-- UÅ REF
— GLASS + UÅ

time, days

Frost test, glass filler

SS 13 72 44, water

Fig. 5

# Change in length

## Alkali/silicic acid test

Fig. 6

GLASS + UÅ
UÅ REF

Fig. 7

GLASS + HF
HF REF

time/days

Particle distribution curves

Fig. 8

Particle distribution curves

Fig. 9

EP 0 889 011 A1

OVERALL PARTICLE DISTRIBUTION CURVES (CEMENT + GF + FINE GRAVEL + STONE)

Fig. 10

EP 0 889 011 A1

| Sample No. | I | II | III | IV | V | VI | VII | VIII | IX | X |
|---|---|---|---|---|---|---|---|---|---|---|
| Constituent material in kg/m$^3$ | | | | | | | | | | |
| Cement | 265 | 265 | 265 | 265 | 265 | 265 | 265 | 265 | 265 | 265 |
| Dansby fine gravel | 1100 | 1200 | 818 | 438 | 568 | 287 | 267 | 290 | 374 | 598 |
| Olivehult fine gravel | 0 | 0 | 244 | 580 | 379 | 639 | 567 | 562 | 666 | 393 |
| Stone, 8-16 mm | 800 | 700 | 800 | 800 | 900 | 900 | 1000 | 1000 | 800 | 900 |
| Water | 172 | 172 | 172 | 172 | 172 | 172 | 172 | 172 | 172 | 172 |
| Flow agent V33 | 3.45 | 3.5 | 3.5 | 3.5 | 3.5 | 3.5 | 0.0 | 3.5 | 2.0 | 3.5 |
| Glass filler | 0 | 0 | 36 | 78 | 51 | 71 | 64 | 46 | 57 | 0 |
| "Lohja Mikrofilleri"[1] | 0 | 0 | 0 | 0 | 0 | 0 | 0 | 0 | 0 | 51 |
| $G_m$[3] | 6.8 | 4.8 | 5.7 | 3.4 | 2.4 | 3.8 | 4.7 | -[2] | 5.1 | 5.5 |
| $H_m$[3] | 9.2 | 7.1 | 9.6 | 6.9 | 6.4 | 5.7 | 7.7 | -[2] | 11.7 | 9.5 |

1) Filler which is marketed in Finland under this trade name and which consists principally of crystalline slag

2) The finished concrete compound was too stiff - it was not possible to measure G and H.

3) The index "m" indicates the average value of 3-4 measurements

FIG. 11

EP 0 889 011 A1

## EXPERIMENTAL SCHEDULE, FULL-SCALE TEST, STRÅ

### PER CENT OF GLASS FILLER (GF)

| KG STONE/$m^3$ | 0% GF | 3% GF | 5% GF | 7% GF |
|---|---|---|---|---|
| 700 KG STONE/$m^3$ | Gm = 4.8<br>Hm = 7.1 | | | |
| 800 KG STONE/$m^3$ | Gm = 6.8<br>Hm = 9.2 | Gm = 5.7<br>Hm = 9.6 | Gm = 5.1<br>Hm = 11.7 | Gm = 3.4<br>Hm = 6.9 |
| 900 KG STONE/$m^3$ | | | Gm = 2.4<br>Hm = 6.4 | Gm 3.8<br>Hm = 5.7 |
| 1000 KG STONE/$m^3$ | | | | Gm = 4.7<br>Hm = 7.7 |

FIGURE 12

EP 0 889 011 A1

Fig. 13

Fig. 14

Compression strength, K30T18 etc.

Compression strength, K30T18 etc.

Compression strength, K30T18 etc.

Fig. 15

Hardening, K30T18 etc.

Hardening, K30T18 etc.

Hardening, K30T18 etc.

Fig. 16

25

## EUROPEAN SEARCH REPORT

**European Patent Office**

Application Number
EP 98 11 1572.8

### DOCUMENTS CONSIDERED TO BE RELEVANT

| Category | Citation of document with indication, where appropriate, of relevant passages | Relevant to claim | CLASSIFICATION OF THE APPLICATION (Int. Cl.6) |
|---|---|---|---|
| X | Dialog Information Services, File 351, World Patent Index 81-93, Dialog accession no. 03479139, WPI accession no. 82-27102E/14, SOFUE M: "Corrosion-resistant coating compsn. contg. finely crushed glass powder poly- epoxide resin", JP 57034167, A, 820224, 8214 (Basic)<br><br>-- | 8-10 | C04B 14/22<br>C04B 18/04<br>C03C 12/00 |
| A | EP 0359239 A2 (LAMONI, PATRICK), 21 March 1990 (21.03.90)<br><br>----- | 1-11 | |

**TECHNICAL FIELDS SEARCHED (Int. Cl.6)**

C03C
C04B

The present search report has been drawn up for all claims

| Place of search | Date of completion of the search | Examiner |
|---|---|---|
| STOCKHOLM | 15 September 1998 | MÅRTEN HULTHEN |

CATEGORY OF CITED DOCUMENTS

X : particularly relevant if taken alone
Y : particularly relevant if combined with another document of the same category
A : technological background
O : non-written disclosure
P : intermidiate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P0401)